# EUROPEAN PATENT APPLICATION

(11) **EP 4 681 802 A1**
(43) Date of publication of application: **21.01.2026**
(21) Application number: 24780755.5
(22) Date of filing: 28.03.2024
(51) Int. Cl.: B01D 53/22, B01D 69/10, B01D 69/12, B01D 71/02, C01B 33/12

(54) **SEPARATION METHOD AND SEPARATION DEVICE**

(30) Priority: 31.03.2023 JP 2023059439; 07.07.2023 JP 2023112649
(71) Applicant: Kogakuin University, Tokyo 163-8677 (JP); Daikin Industries, Ltd., Osaka-shi, Osaka 530-0001 (JP)
(72) Inventor: AKAMATSU, Kazuki, Tokyo 163-8677 (JP); KOBORI, Yuna, Tokyo 163-8677 (JP); SUZUKI, Junya, Tokyo 163-8677 (JP); YAMAGUCHI, Shuhei, Osaka-shi, Osaka 530-0001 (JP); NAMIKAWA, Takashi, Osaka-shi, Osaka 530-0001 (JP); YAMAUCHI, Akiyoshi, Osaka-shi, Osaka 530-0001 (JP); KISHIKAWA, Yosuke, Osaka-shi, Osaka 530-0001 (JP)
(74) Representative: E. Blum & Co. AG
(86) International application number: PCT/JP2024/012913
(87) International publication number: WO 2024/204658

(57) **Abstract**

A method of separating a mixed fluorocarbon gas includes: a gas separation step of bringing a mixed gas x that includes two or more kinds of fluorocarbon gases having different molecular diameters into contact with a molecular sieve membrane 20 that includes amorphous silica and that is formed using a chemical vapor deposition method, thereby separating the mixed gas into gases a and b having different mixing ratios from that in the mixed gas. A separation device includes an amorphous silica-containing porous membrane formed using a chemical vapor deposition method, and the device separates, via the porous membrane, a single gas or a gas composition having an increased mixing ratio of one kind of fluorocarbon gas from a mixed gas containing two or more kinds of fluorocarbon gases having different molecular diameters.

## Description

### Technical Field

The present disclosure relates to a separation method and a separation device for a mixed fluorocarbon gas.

### Background Art

An example of a technique for separating a specific refrigerant gas from a mixed refrigerant composed of plural refrigerant gases is a distillation method. However, the distillation method involves a large energy consumption and a large cost for facility investment. In consideration thereof, a technique of separating a mixed refrigerant gas into different refrigerant gases and collecting them at low cost is desired.

For example, Patent Document 1 discloses a separation-collection method for fluorocarbons from a fluorocarbon-containing mixed gas, characterized by: bringing a fluorocarbon-containing mixed gas into contact with a selective permeation complex membrane in which an active thin film formed by crosslinking of a crosslinkable silicone resin is provided on a porous supporting membrane formed of a polyimide or polysulfone, allowing fluorocarbons to selectively permeate the membrane, and separating the fluorocarbons.

Further, Non-Patent Document 1 reports that a mixture R410A composed of 50% of difluoromethane (HFC-32, CH₂F₂) and 50% of pentafluoroethane (HFC-125, CHF₂CF₃) was separated using a polydimethylsiloxane and a fluorine-containing amorphous polymer film composed of 5 mol% of perfluoro(butenyl vinyl ether) and 95 mol% of perfluoro(2,2-dimethyl-1,3-dioxol), and that it was found that permeability was higher for HFC-32 than for HFC-125.

Patent Document 1: Japanese Patent Application Laid-open (JP-A) No. H1-42444

Non-Patent Document 1: Abby N. Harders et al., J.Membr.Sci., 652, 120467 (2022)

### SUMMARY OF INVENTION

### Problem to be Solved by Invention

Fluorocarbons are used, in the form of a mixed gas, as a refrigerant or the like. However, fluorocarbons are difficult to separate due to azeotropy or the like, and efficient separation and recycling thereof through membrane separation is not easy because differences in molecular diameters are small.

According to the separation techniques for fluorocarbon gases disclosed in Patent Document 1 and Non-Patent Document 1, the ratio between the permeabilities of the respective fluorocarbon gases is from a few fold to about 20 fold, and a separation technique having a higher selectivity is desired.

An object of the present disclosure is to provide a novel separation method for fluorocarbons and a novel separation device for fluorocarbons.

### Solution to Problem

Means for achieving the foregoing object include the following aspects.
<1> A method of separating a mixed fluorocarbon gas, the method including:
   a molecular sieve membrane preparation step of preparing a molecular sieve membrane that includes an amorphous silica and that is formed using a chemical vapor deposition method; and
   a gas separation step of bringing a mixed gas that includes two or more kinds of fluorocarbon gases having different molecular diameters into contact with the molecular sieve membrane, thereby performing separation so as to obtain a gas in which a mixing ratio between the two or more kinds of fluorocarbon gases is different from that in the mixed gas before being brought into contact with the molecular sieve membrane.
<2> The method of separating a mixed fluorocarbon gas according to <1>, wherein the molecular sieve membrane is an amorphous silica membrane having a structure including an -Si-O-Si- bond.
<3> The method of separating a mixed fluorocarbon gas according to <1> or <2>, wherein the gas separation step is conducted in an environment of from 20°C to 300°C.
<4> The method of separating a mixed fluorocarbon gas according to any one of <1> to <3>, wherein the gas separation step is conducted in an environment of 0.1 MPa or more.
<5> The method of separating a mixed fluorocarbon gas according to any one of <1> to <4>, wherein the molecular sieve membrane has been formed using dimethoxy diphenyl silane as a chemical vapor deposition material in the chemical vapor deposition method.
<6> The method of separating a mixed fluorocarbon gas according to any one of <1> to <5>, wherein the chemical vapor deposition method is a counter diffusion method.
<7> The method of separating a mixed fluorocarbon gas according to any one of <1> to <6>, wherein the molecular sieve membrane is formed on a porous support made of a ceramic.
<8> The method of separating a mixed fluorocarbon gas according to any one of <1> to <7>, wherein the mixed fluorocarbon gas is a mixed gas of difluoromethane and pentafluoroethane.
<9> A separation device, including an amorphous silica-containing porous membrane formed using a chemical vapor deposition method,
   wherein the device separates, via the porous membrane, a single gas or a gas composition having an increased mixing ratio of one kind of fluorocarbon gas from a mixed gas containing two or more kinds of fluorocarbon gases having different molecular diameters.

### Effect of Invention

According to the present disclosure, a novel separation method for fluorocarbons and a novel separation device for fluorocarbons are provided.

### BRIEF DESCRIPTION OF DRAWINGS

Fig. 1 is a schematic diagram illustrating one example of a configuration of a molecular sieve membrane used in a separation method for a mixed fluorocarbon gas and a separation device for a mixed fluorocarbon gas according to the present disclosure.
Fig. 2 is a schematic configuration diagram illustrating a gas separator which is a significant part of one embodiment of a device configured to practice a separation method for a mixed fluorocarbon gas according to the present disclosure.
Fig. 3 is a schematic cross-sectional view illustrating a cross-section of a molecular sieve membrane and a housing taken along a line C-C in Fig. 2.
Fig. 4 is a schematic diagram illustrating a configuration of a membrane-forming and gas permeation testing device used in the Examples.
Fig. 5 shows an Arrhenius plot of respective single-component gases in the Examples.
Fig. 6 shows a temperature dependence of ideal selectivity in the Examples.
Fig. 7 shows pressure dependence of permeability for each of single-component gases HFC-32 and HFC-125 at 200°C.
Fig. 8 shows pressure dependence of permeability for each of single-component gases HFC-32 and HFC-125 at 100°C.
Fig. 9 shows pressure dependence of permeability for each of single-component gases HFC-32 and HFC-125 at 25°C.

### MODES FOR CARRYING OUT INVENTION

Embodiments of the present disclosure are described below with reference to the drawings. In the present specification, any numerical range expressed using "to" refers to a range that includes the values described before and after the "to" as the lower and upper limit values. In the present specification, the term "step" encompasses not only an independent step, but also a step that cannot be clearly distinguished from another step but nonetheless achieves a desired purpose of the step of interest. In the present disclosure, a combination of two or more preferable aspects constitutes a more preferable aspect. Throughout the figures, it is intended that constitutional elements designated by the same reference character are the same constitutional element. Reference characters for members having the same function may be omitted in the figures. Reference characters may also omitted in the descriptions below. Dimensional ratios in the figures do not necessarily reflect the actual dimensional ratios.

The inventors of the present disclosure has conducted study and experiments regarding a method for separating a refrigerant gas in which two or more kinds of fluorocarbon gases having different molecular sizes are mixed (sometimes referred to as "mixed fluorocarbon gas" in the present disclosure) with high selectivity, and have found that separation with high selectivity is enabled by using an amorphous silica-containing molecular sieve membrane formed using a chemical vapor deposition method (also referred to as "chemical vapor-phase growth method", and may be expressed as the "CVD method"), based on utilization of differences in physical properties (such as sizes) of different gases. In the present disclosure, the amorphous silica-containing molecular sieve membrane formed using a chemical vapor deposition method is sometimes referred to as a "CVD amorphous silica membrane", an "amorphous silica membrane", or, simply, a "silica membrane".

For example, the active thin membrane formed by crosslinking of a crosslinkable silicone resin disclosed in Patent Document 1 or the fluorine-containing amorphous polymer membrane disclosed in Non-Patent Document 1 separates gases based on a dissolution-diffusion effect utilizing a difference in gas solubility and gas diffusability in the membrane, rather than based on a porous membrane. In contrast, the CVD amorphous silica membrane to be used in the present disclosure mainly utilizes differences between sizes of respective gases, and separates gases based on a molecular sieve effect provided by pore diameter regulation.

For example, a mixed refrigerant R410A, composed of difluoromethane (also referred to as "HFC-32" or "R32") and pentafluoroethane (also referred to as "HFC-125" or "R125"), is used as a refrigerant in air-conditioners and as a refrigerant in the field of freezing and refrigeration. However, replacement with R32, which has a smaller global warming potential, is in progress. The CVD amorphous silica membrane used in the present disclosure has a permeability for difluoromethane (R32, having a molecular diameter of 0.363 nm) that is more than 100 times greater than a permeability for pentafluoroethane (R125, having a molecular diameter of 0.447 nm). It is observed that the permeability ratio is temperature-dependent in the range of from room temperature (for example, 25°C) to 200°C. It is also found that the permeability ratio is greater at high temperatures, which indicates a higher suitability for separation. It is also found that the permeability is hardly pressure-dependent.

Specifically, a method of separating a mixed fluorocarbon gas (sometimes referred to simply as a "mixed gas" in the present disclosure) according to the present disclosure includes:
a molecular sieve membrane preparation step of preparing a molecular sieve membrane that includes an amorphous silica and that is formed using a chemical vapor deposition method; and
a gas separation step of bringing a mixed gas that includes two or more kinds of fluorocarbon gases having different molecular diameters into contact with the molecular sieve membrane, thereby performing separation so as to obtain a gas in which a mixing ratio between the two or more kinds of gases is different from that in the mixed gas before being brought into contact with the molecular sieve membrane.

### <Molecular Sieve Membrane>

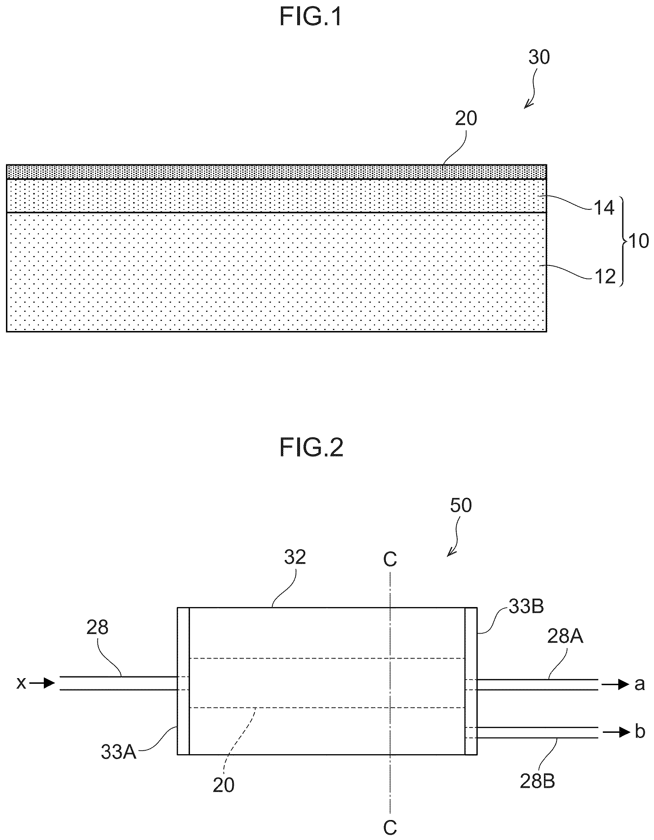

First, the molecular sieve membrane to be used in the method of separating a mixed fluorocarbon gas according to the present disclosure is described. Fig. 1 is a cross-sectional view schematically illustrating one embodiment of a gas separation member equipped with a molecular sieve membrane to be used in the method of separating a mixed fluorocarbon gas according to the present disclosure. A gas separation member 30 shown in Fig. 1 includes a porous support 10 and an amorphous silica layer (amorphous silica membrane) 20 formed as a molecular sieve membrane provided on one side of the porous support 10. The amorphous silica layer 20 has a molecular sieve function of allowing a fluorocarbon gas having a relatively small molecular diameter among the two or more kinds of fluorocarbon gases contained in the mixed fluorocarbon gas to selectively or preferentially pass through.

The molecular sieve membrane in the present disclosure may be configured by a CVD amorphous silica layer alone. However, from the viewpoints of the strength of the molecular sieve membrane and ease of formation of the molecular sieve membrane, the molecular sieve membrane preferably have a configuration of a gas separation member 30 having a structure in which the amorphous silica layer 20 as a molecular sieve membrane is supported by the porous support 10, as illustrated in Fig. 1. The amorphous silica layer 20 may be provided not only on a face of the porous support 10, but also in pores of the porous support 10, as described later.

### (Porous Support)

A porous support having pores having permeability for the fluorocarbon gas to be isolated may be used as the porous support 10, which supports the amorphous silica layer 20.

In the embodiment illustrated in Fig. 1, the porous support 10 has a double layer structure composed of a support layer 12 and an intermediate layer 14, each of which is a porous body. It is preferable to use a porous support 10 that includes (i) a support layer 12 that has a favorable strength and a favorable gas permeability and that is advantageous in terms of cost and (ii) an intermediate layer 14 having more favorable properties in terms of retention of the amorphous silica layer 20 and having smaller pores than those of the support layer 12, such as the double layer structure illustrated in Fig. 1, from the viewpoints that the amorphous silica layer 20 can be more stably immobilized and that the amorphous silica layer 20 is maintained stable for a longer time. In the present disclosure, a side of the intermediate layer 14 that is opposite to a side thereof contacting the support layer 12 is sometimes referred to as the "front face of the intermediate layer".

In the porous support 10 having a double layer structure, the amorphous silica layer 20 is provided at least on the front face of the intermediate layer 14. The amorphous silica layer 20 may be provided only on the front face of the intermediate layer 14, or may be formed not only on the front face of the intermediate layer 14 but also to the interior of the pores of the intermediate layer 14. Among others, the porous support 10 having a double layer structure preferably has the amorphous silica layer 20 in the interior of the pores of the intermediate layer 14 as well as on the front face of the intermediate layer 14. In a case in which the amorphous layer 20 is provided in the interior of the pores of the intermediate layer 14, the amorphous silica layer 20 exists more densely and more stably in the state in which the amorphous silica layer 20 is filled into the pores. Therefore, the function of the amorphous silica layer 20 as a molecular sieve further improves, and the amorphous silica layer 20 is considered to function as a separation-active region at which the function of separating a mixed fluorocarbon gas is favorable. The separation-active region will be described later.

The expression "the amorphous silica layer is provided in the interior of the pores" refers to both of a state in which the amorphous silica layer is formed on the inner wall of the pores and a state in which the interior of the pores is filled with amorphous silica such that a part of the mixed fluorocarbon gas can pass through. In a case in which the amorphous silica layer is formed by the after-mentioned chemical vapor deposition method, a silica precursor in the vapor phase penetrates into the interior of the pores of the porous support, and transforms into amorphous silica at the inner wall face of the pores. As the chemical vapor deposition is further continued, the thickness of the amorphous silica layer formed on the inner wall face of the pores increases, so that the interior of the pores of the porous support may be filled with the amorphous silica layer. Any of these situations is referred to by the expression "the amorphous silica layer is provided in the interior of the pores".

An example of a preferable aspect of the molecular sieve membrane to be used in the method of separating a mixed fluorocarbon gas according to the present disclosure is an aspect in which an amorphous silica layer is provided in the interior of the pores of the intermediate layer as well as on the front face of the intermediate layer, and in which the thickness of the separation-active region for fluorocarbon gases in the amorphous silica layer is from 5 nm to 15 nm, and in which the membrane length (length in the longitudinal direction) of the amorphous silica layer is 6 cm or more.

An example of the material of the porous support is a porous ceramic, from the viewpoints including pore diameter and easy availability. From the viewpoint of heat resistance, metal oxides, metal nitrides, and metal nitrides are preferable, more specifically, porous supports such as of alumina, silica, titania, zirconia, or magnesia are more preferable, and an α-alumina support is particularly preferable.

In a case in which the porous support is tubular, the size thereof is not particularly limited. For example, the tubular porous support may have an outer diameter of approximately from 3 mm to 20 mm, an inner diameter of approximately from 1 mm to 15 mm, and a wall thickness of approximately from 1 mm to 3 mm.

The average pore diameter of the porous support is preferably in a range of from 30 nm to 1000 nm, more preferably in a range of from 50 nm to 500 nm, and still more preferably in a range of from 80 nm to 180 nm.

The porous support having a double layer structure is preferably a porous support in which an α-alumina layer that is a tubular body having an average pore diameter of from 20 nm to 1000 nm, preferably from 80 nm to 180 nm, is used as the support layer 12, and in which a γ-alumina layer having an average pore diameter of from 1 nm to 20 nm, preferably from 3 nm to 5 nm, is provided as the intermediate layer 14 on the outer face the tubular support layer 12.

The average pore diameter of a porous support can be determined, for example, by measuring a pore diameter distribution using a through pore diameter analyzer based on the ASTM F316-86 (JIS K3832) bubble point method. The instrument to be used for the measurement is, for example, a Perm Porometer manufactured by Seika Digital Image Corporation.

The thickness of the support layer 12 may be freely selected in accordance with purpose. From the viewpoint of balance between strength and gas permeability, the thickness of the support layer 12 is, for example, from 0.5 mm to 3 mm, and preferably from 1 mm to 2 mm.

The thickness of the intermediate layer 14 is, for example, from 0.5 µm to 10 µm, and preferably from 1 µm to 5 µm.

The thicknesses of the support layer 12 and the intermediate layer 14 in the porous support 10 can be measured by subjecting a cross-section thereof to platinum sputtering and observing the cross-section using a field emission-scanning electron microscope (FE-SEM). An example of the FE-SEM instrument is JSM-6701F (manufactured by JEOL Ltd.). The acceleration voltage of the FE-SEM is set to, for example, 10.0 kV.

The method used for providing the intermediate layer 14 on the support layer 12 as a porous support is not particularly limited, and known methods for producing a porous layer can be applied, as appropriate.

Among others, a method including coating the after-mentioned boehmite sol-containing intermediate layer forming material on the support layer 12 and performing baking is preferable in a case in which the support layer 12 is a material having high heat resistance such as alumina. In a case in which the method of forming the intermediate layer 14 using the boehmite sol-containing intermediate layer forming material is used, the intermediate layer 14 can be formed with a freely-selected thickness, for example, based on the coating amount of the intermediate layer forming material, the baking temperature, and use of a method including performing the coating and the baking plural times.

The method used for producing a porous support having a double layer structure is, for example, a method including dip-coating a boehmite sol as an intermediate layer forming material twice or three times on the outer face of a tubular porous support layer made of α-alumina, and performing baking so as to form a γ-alumina intermediate layer having an average pore diameter of from 3 nm to 5 nm. When the intermediate layer forming material is to be coated on the tubular support layer, a treatment, such as sealing of ends of the tubular body, is preferably carried out so as to prevent the intermediate layer forming material from entering the inner space of the tubular body, which is the support layer 12.

The boehmite sol can be prepared, for example, using aluminum-s-butoxide (also abbreviated to "ALBS"), 2-propanol, and gallium(III) nitrate octahydrate, or using aluminum-s-butoxide (also abbreviated to "ALBS"), 2-propanol, and nitric acid, according to ordinary methods.

### (Amorphous Silica Layer)

The amorphous silica layer 20 has a function of selectively separating fluorocarbon gases contained in a mixed fluorocarbon gas by means of a molecular sieve, i.e., based on their molecular diameters (molecular sizes). The amorphous silica layer 20 preferably has an amorphous structure in which siloxane bonds represented by -Si-O-Si- form a three-dimensional network. The three-dimensionally formed mesh structure of silicon dioxide is considered to serve as a molecular sieve.

The thickness of the amorphous silica layer 20 is not particularly limited. A larger thickness of the amorphous silica layer as a molecular sieve membrane tends to improve the fluorocarbon gas separation efficiency, but tends to lower the gas permeability. From such a viewpoint, the thickness of the separation-active region of the amorphous silica layer is, for example, from 5 nm to 100 nm, and is preferably in a range of from 5 nm to 15 nm. Here, the "separation-active region" of the amorphous silica layer refers to a region of the amorphous silica layer that is dense and contributes to the ability to separate fluorocarbon gases. It is surmised that a region of an amorphous silica layer formed in the interior of the pores of the intermediate layer that has a more dense structure functions as a separation-active region having a high separation activity for fluorocarbon gases, as compared to a silica membrane formed on the front face of the intermediate layer. The foregoing region is referred to as a "separation-active region" of the amorphous silica layer. The separation-active region of the amorphous silica layer can be confirmed as a region having increased A12p and decreased Si2p in depth-direction elemental compositions of the generated amorphous silica layer, which are obtained as a result of an analysis using the after-mentioned X-ray photoelectron spectroscopy (XPS).

The thickness of the amorphous silica layer and the thickness of the separation-active region of the amorphous silica layer can be measured by performing elemental composition analysis of the amorphous silica layer of the gas separation member, using X-ray photoelectron spectroscopy (hereinafter referred to as "XPS") performed from a side opposite to the porous support side, along the depth direction of the membrane. In the present disclosure, thickness values measured at a chamber internal pressure of less than 10⁻⁸ Pa and an etching rate of 0.05 nm/s using an XPS VG ESCALAB 250 spectrometer (manufactured by Thermo Fisher Scientific) on which an Al Kα source is mounted can be adopted. The elements and electron orbitals that are selected to be analyzed by XPS are the 2p orbitals of Si, the 2p orbitals of Al, the 1s orbital of O, and the 1s orbital of C.

In a case in which the mixed fluorocarbon gas to be separated includes two kinds of fluorocarbon gases having different molecular diameters, the amorphous silica layer 20 preferably has an average pore diameter that is larger than the fluorocarbon gas having the proportionally smaller molecular diameter, and that is smaller than the fluorocarbon gas having the proportionally larger molecular diameter. For example, in the case of separating a mixed gas of R32 (having a molecular diameter of 0.363 nm) and R125 (having a molecular size of 0.447 nm), the average pore duameter of the pores formed by the mesh structure of silicon dioxide in the amorphous silica layer 20 may be set to approximately from 0.38 to 0.42 nm, so that R32 can easily pass through, so that R125 is difficult to pass through, and so that the mixed fluorocarbon gas can be efficiently separated with a high gas selectivity.

Alternatively, the average pore diameter of the amorphous silica layer 20 may be larger than the molecular diameter of R125 since R32 passes through more easily than R125 even in the case in which the average pore diameter of the amorphous silica layer 20 is larger than the molecular diameter of R125.

The pore diameters of the amorphous silica membrane used in the present disclosure have a distribution. Since the average pore diameter is less than 1 nm, there is no quantitative pore diameter distribution measuring method. However, pore diameter can be analytically estimated according to the normalized Knudsen-based permeance (NKP) method, using permeation data for single-component gas permeation. In the present disclosure, more specifically, an amorphous silica membrane of which the average pore diameter is estimated to be from 0.3 to 0.6 nm based on the NKP method (at 200°C) described in the following document can be used.

### <Document regarding the NKP method>

Hye Ryeon Lee, Masakoto Kanezashi, Yoshihiro Shimomura, Tomohisa Yoshioka, Toshinori Tsuru, "Evaluation and fabrication of pore-size-tuned silica membranes with tetraethoxydimethyl disiloxane for gas separation", AIChE Journal, 57(10) (2011), 2755-2765

### <Method of Producing Molecular Sieve>

The molecular sieve membrane to be used in the method of separating a mixed fluorocarbon gas according to the present disclosure can be produced by a chemical vapor deposition (CVD) method. The CVD method enables an amorphous silica layer 20 having a high durability to be formed on the porous support 10.

CVD methods for use in the membrane formation of the amorphous silica layer 20 include the one-sided diffusion CVD method including supplying a silica precursor from a silica source and an oxidizing agent, preferably oxygen, to one side of a porous support so as to form an amorphous silica layer, and the counter diffusion CVD method including supplying a silica precursor from a silica source to one side of a porous support and supplying an oxidizing agent to the other side of the porous support.

In the counter diffusion CVD method, as a result of maintaining both sides of a porous support at an equal pressure, the silica precursor and the oxidizing agent that have diffused into the pores of the porous support contact each other in the pores and generate amorphous silica, whereby an amorphous silica layer is formed on the pore walls in the pores of the porous support; here, filling of the pores with the silica layer automatically terminates the reaction, whereas the reaction between the silica precursor and oxygen continues in pores of the porous support that are not filled with the silica layer. As a result, the reaction continues until the pores are filled with the amorphous silica layer, and provision of a high-performance amorphous silica layer is facilitated with high reproducibility. In other words, the counter diffusion CVD method enables an amorphous silica layer to be easily formed in the interior of the pores of the intermediate layer as well as on the front face of the intermediate layer of the porous support having a double layer structure, which is a preferable aspect as described above.

In the case of the counter diffusion CVD method as an example, the formation of the amorphous silica layer 20 is conducted as follows. The porous support 10 is placed inside a housing. A silicon compound as a silica source is placed in a bubbler, and is heated while nitrogen gas is supplied, thereby supplying vapor of the silicon compound into the inside of the housing. The temperature inside the housing is set to a temperature of from 300°C to 650°C. The vapor of the silicon compound as the silica source in the housing is supplied to one side of the porous support (for example, to the outer circumferential surface side), and oxygen is allowed to flow over the other side (for example, the inner circumferential surface side), thereby allowing them to react with each other within the porous support. For example, in the case of forming an amorphous silica layer on the outer surface of a tubular porous support having a length of from 10 mm to 100 mm, the concentration of the silicon compound vapor may be set to about 0.93 mol/m³, and the flow rate of oxygen may be set to about 200 mL/min, in which case a sufficient amount of amorphous silica layer will be formed in about 60 minutes.

Thereafter, the silicon compound vapor is stopped, the inside of the housing is purged with oxygen, the supply of oxygen is stopped, and nitrogen is supplied to the inner side of the porous support for purging, as a result of which an amorphous silica layer is obtained.

Examples of chemical vapor deposition materials (silica sources) that can be used in the production of the amorphous silica layer 20 include dimethoxy dimethyl silane (DMDMS), tetraethyl orthosilicate (TEOS), hexamethyl disiloxane (HMDS), tetramethyl orthosilicate (TMOS), trimethyloxy (methyl)silicate (TMMS), methoxy trimethyl silicate (MTMS), phenyl trimethoxy silane (PTMS), dimethoxy diphenyl silane (DMDPS), triethoxy ethyl silane, diethoxy diethyl silane, ethoxy triethyl silane, and methoxy triphenyl silane. Abbreviations of compounds are given in the parentheses that follow the names of the respective compounds, and the compounds are sometimes described using the abbreviations indicated in the parentheses.

As silica sources, DMDMS, TMOS, HMDS, TEOS, TMMS, MTMS, DMDPS, and the like are preferable, and DMDPS is more preferable. In other words, the amorphous silica layer is more preferably derived from a silica source that contains DMDPS.

The method used for producing a molecular sieve membrane for use in the method of separating a mixed fluorocarbon gas according to the present disclosure preferably includes a step of forming an amorphous silica layer having, for example, an average pore diameter as determined by the NKP method (at 200°C) of from 0.3 nm to 0.6 nm on, for example, an aluminum oxide porous support having an average pore diameter of from 30 nm to 1000 nm, using a silica source containing dimethoxy diphenyl silane (DMDPS) in a CVD method.

The porous support may have a double layer structure of at least the support layer 12 and the intermediate layer 14 as described above, and it is preferable that the support layer 12 is a porous body having an average pore diameter of from 50 nm to 200 nm while the intermediate layer 14 is a porous body having an average pore diameter of from 3 nm to 5 nm, and it is more preferable that the amorphous silica layer 20 is formed not only on the front face of the intermediate layer 14 of the porous support 10 having a double layer structure, but also in the pores of the intermediate layer 14, by using the counter diffusion CVD method.

### <Method of Separating Mixed Fluorocarbon Gas>

Next, a process in which a mixed fluorocarbon gas is separated by the method of separating a mixed fluorocarbon gas according to the present disclosure is described with reference to the drawings.

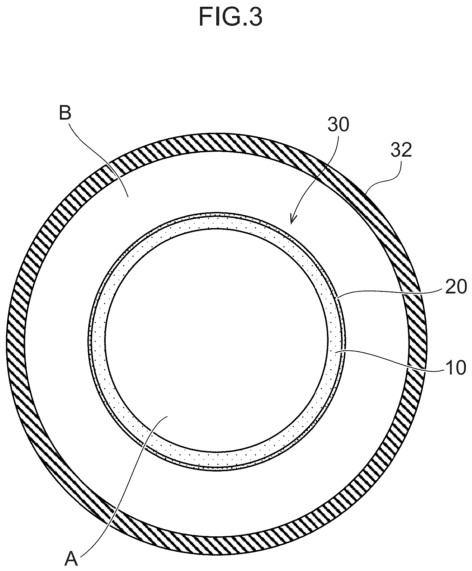

Fig. 2 is a schematic configuration diagram illustrating a gas separator which is a significant part of one embodiment of a device configured to practice the method for separating a mixed fluorocarbon gas according to the present disclosure. Fig. 3 schematically illustrates a cross-section taken along a line C-C in Fig. 2.

In a gas separator 50 shown in Fig. 2, a tubular gas separation member 30 is disposed inside a tubular housing 32, and both ends are sealed by sealing members 33A and 33B. A tube 28 for introducing a mixed gas x is connected at a central portion of the sealing member 33A such that the tube 28 is in communication with the inner space A of the gas separation member 30. Further, a tube 28A for discharging a passing gas that has not permeated the gas separation member 30 is connected to a central portion of the sealing member 33B such that the tube 28A is in communication with the inner space A of the gas separation member 30. A tube 28B for discharging a gas that has permeated the gas separation member 30 is connected to a portion at or around the outer circumference of the sealing member 33B such that the tube 28B is in communication with a space B between the gas separation member 30 and the housing 32. The gas separation member 30 has a layer configuration illustrated in Fig. 1, and a CVD amorphous silica layer (a silica membrane) 20 is formed as a molecular sieve membrane disposed as the outermost layer.

Gas permeation through the molecular sieve membrane 20 can be facilitated by connecting a vacuum pump (not shown) to the tube 28B and performing suctioning. The gas flow rate and pressure can be adjusted by providing valves (not shown) to respective tubes 28, 28A, and 28B. The diameter of the tube 28A for discharge from the gas separation member 30 may be made smaller than that of the tube 28 for introduction of a mixed gas, so as to increase the pressure inside the gas separation member 30, and so as to facilitate permeation of a gas through the molecular sieve membrane 20.

In a case where a mixed fluorocarbon gas in which R125 and R32, for example, are mixed is separated using a gas separation device equipped with a gas separator 50 having the configuration discussed above, the mixed gas x is supplied to the inside (inner space A) of the gas separation member 30 through the tube 28. While the mixed gas x penetrates the gas separation member 30, the mixed gas x passes the porous support 10 and contacts with the amorphous silica layer 20, and at least a portion of R32 having a proportionally smaller molecular diameter permeates the amorphous silica layer 20 and moves to the space B between the gas separation member 30 and the housing 32. As a result, a gas "a" having a lower R32 concentration than that in the mixed gas x before introduction is discharged through the tube 28A, and a gas "b" having a higher R32 concentration than that in the mixed gas x before introduction is discharged through the tube 28B.

As an example, the gas separation device may be configured to include plural gas separators 50, so that the separation efficiency can be improved due to the mixed gas x passing the gas separator 50 multiple times. The gas separation device according to the present disclosure can be designed to perform multi-stage separation of the mixed gas x. Use of the gas separation device according to the present disclosure enables a single gas or a gas composition having a heightened mixing ratio of one kind of fluorocarbon gas to be separated from a mixed gas containing two or more kinds of fluorocarbon gases having different molecular diameters.

Further, a configuration may be adopted in which the mixed gas x is supplied to the outer side (space B) of the gas separation member 30 so as to allow at least a portion of R32 having a proportionally smaller molecular diameter to permeate to the inside (inner space A) of the gas separation member 30, and in which a gas having a higher R32 concentration than that in the mixed gas x before introduction is discharged through the tube 28A and a gas having a lower R32 concentration is discharged through the tube 28B.

The environment in which gas separation is conducted using the method of separating a mixed fluorocarbon gas according to the present disclosure is not particularly limited. Since the gas separation member 30 to be used in the present disclosure is configured by an inorganic material, the gas separation member 30 has a high heat resistance. Further, it has been found, through the after-mentioned fluorocarbon gas permeation experiment in the present disclosure, that the gas separation member 30 exhibits a higher gas selectivity at from 100°C to 200°C than that at ordinary temperature (for example, 25°C). Therefore, gas separation is preferably carried out, for example, in an environment of from 20°C to 300°C.

According to the after-mentioned fluorocarbon gas permeation experiment, permeability exhibits hardly no pressure dependence. Therefore, gas separation is preferably carried out in an environment having a pressure of 0.1 MPa or more.

The permeation amount of the gas to be isolated is not particularly limited, and may be set in accordance with the kind of gas and the like. For example, the R32 permeation amount ([mol/(m²•s•Pa)]) is preferably from 1.0×10⁻⁴ to 1.0×10⁻¹⁰, more preferably from 1.0x10⁻⁵~1.0x10, and still more preferably from 1.0×10⁻⁶ to 1.0×10⁻⁸

### EXAMPLES

The method of separating a mixed fluorocarbon gas according to the present disclosure is further described below with reference to Examples. However, the Examples are not intended to limit the method of separating a mixed fluorocarbon gas according to the present disclosure.

### [Formation of Amorphous Silica Membrane]

An amorphous silica membrane was formed according to the following procedure.

A Ga-added γ-alumina intermediate layer was coated on the outer circumference side of a tubular α-alumina base material, using the sol-gel method. Then, an amorphous silica membrane (hereinafter sometimes referred to as "silica membrane") was formed by vapor-depositing amorphous silica in the interior of the pores of the Ga-added γ-alumina intermediate layer, using the counter diffusion CVD method. The specifics are given below.

### (1) Preparation of Porous Support

### (Base Material)

A tubular α-alumina base material (manufactured by NORITAKE CO., LIMITED) was used as a base material that serves as a support layer. The specifics of the α-alumina base material are given in Table 1. Here, the "pore diameter" means an average pore diameter.

**Table 1**

| Shape | Total Length | Outer Diameter | Inner Diameter | Pore Diameter |
|---|---|---|---|---|
| Tubular | 400 mm | 6 mm | 4 mm | 150 nm |

The α-alumina base material was cut to a total length of 120 mm using a diamond cutter, and 20 mm portions at both ends were glass-sealed. The length of the amorphous membrane to be formed on the base material was 80 mm, which was the length of a portion that was not glass-sealed.

### (γ-alumina Coating)

γ-alumina coating was applied only to the outer surface of the base material. The procedure employed included three stages of (i) preparation of a Ga-added boehmite sol (hereinafter sometimes referred to as "boehmite sol"), (ii) preparation of a coating solution, and (iii) dip coating and baking, as described below.

### (Preparation of Ga-added Boehmite Sol)

The following reagents were prepared.
- 500 g of aluminum s-butoxide (ALSB), manufactured by Fujifilm Wako Pure Chemical Corporation
- 500 mL of 2-propanol, manufactured by Fujifilm Wako Pure Chemical Corporation
- 25 g of gallium(III) nitrate octahydrate, manufactured by Fujifilm Wako Pure Chemical Corporation

### <Preparation Procedure>

ALSB, 2-propanol, a 50 mL beaker, a stir bar, a Pasteur pipette, a 100 mL dropping bottle, a nitrogen balloon, an electronic scale, and a stirrer were placed in a glove box (manufactured by AS ONE Corporation), and the glove box was closed. Here, the nitrogen balloon was prepared before the glove box was closed.

Inside of the glove box was subjected to nitrogen substitution for 15 minutes. After nitrogen substitution, 3.60 g (0.06 mol) of 2-propanol was put in the beaker, so as to wet the inner wall of the beaker. 24.6 g (0.10 mol) of ALSB was supplied directly from the reagent bottle into the beaker of which the wall had been wetted with 2-propanol, and stirring was performed for one hour. 360 mL of pure water was added into a 500 mL beaker, and heated to 90°C on a hot stirrer. For liquid level adjustment, pure water at 90°C was prepared beside the 500 mL beaker, and the pure water was supplied to the 500 mL beaker, as necessary for replenishment. The opening of each of the beakers was covered with aluminum foil during periods other than the handling periods. In the glove box, the mixed liquid of ALSB and 2-propanol was added into the 100 mL dropping bottle, and the nitrogen balloon was attached to the upper mouth of the dropping bottle.

The dropping bottle to which the nitrogen balloon was attached was taken out of the glove box. The prepared pure water at 90°C on the hot stirrer was rigorously stirred, and the mixed liquid of ALSB and 2-propanol was dropwise added thereto. The opening of the beaker was left open without being covered by aluminum foil, and the liquid in the beaker at 90°C was continued to be stirred until 2-propanol evaporated (until alcohol odor disappeared), while the liquid volume was maintained at 340 mL.

17.14 g (0.04 mol) of gallium(III) nitrate octahydrate was added to 108 g (6 mol) of pure water, the opening of this beaker was covered with a parafilm, and stirring was performed for at least one hour, thereby preparing a gallium nitrate aqueous solution.

After 2-propanol had evaporated, the liquid was transferred to a 500 mL conical flask. In this process, white precipitates, if any, were also transferred as much as possible. The opening of the conical flask was covered with aluminum foil, followed by natural cooling. After natural cooling, while the liquid in the conical flask was rigorously stirred, the gallium nitrate aqueous solution was slowly added thereto dropwise. Stirring was performed for at least 12 hours, to obtain a boehmite sol, which was placed in a plastic bottle and stored.

### (Preparation of Coating Solution)

Besides the boehmite sol prepared above, the following chemicals were prepared.
- 500 mL of 1 mol/L nitric acid, manufactured by Fujifilm Wako Pure Chemical Corporation
- 500 g of polyvinyl alcohol 500, fully saponified, manufactured by Fujifilm Wako Pure Chemical Corporation

### <Preparation Procedure>

(i) 47.5 mL of pure water and 2.5 mL of 1 M HNO₃ were put in a 50 mL measuring cylinder. This solution was transferred to a 100 mL conical flask and a stir bar was also put in the flask.
(ii) While the solution was gently stirred so as not to foam, 1.75 g of fully saponified polyvinyl alcohol (PVA) 500 was added into the 100 L conical flask.
(iii) Since PVA is difficult to dissolve, the 100 mL conical flask was placed on a hot plate stirrer, the opening of the conical flask was closed by aluminum foil, and the solution was stirred while the solution was heated to 90°C. After 40 minutes, the solution was allowed to naturally cool still in the state of being stirred, whereby a final PVA solution was obtained.
(iv) 20 mL of the prepared PVA solution and 30 mL of the boehmite sol were placed in a 50 mL beaker, a stir bar was also put in the beaker, and the opening of the beaker was covered with a parafilm. After 15 minutes of stirring, a final coating liquid was obtained.

### (Dip Coating and Baking)

### <Operation Procedure>

(i) In order to apply coating only to the outer surface of the base material, the opening at one end of the substrate (the lower side at dipping) was closed by a seal tape, thereby preventing the coating solution from entering the inner side of the base material.
(ii) The coating solution was placed in a test tube while avoiding entry of air bubbles. The remaining coating solution was stored while being stirred. The base material having a total length of 120 mm was made to enter the coating solution from the side of the base material that was closed by the seal tape, and the base material was dipped for 5 seconds. Care was taken so as not to bring the base material to contact the wall of the test tube during entry and removal of the base material.
(iii) The base material after dipping was placed in an electric muffle furnace KM-600 (manufactured by Advantech Co., Ltd.), and dried and baked according to a predetermined temperature program (held at 60°C for 3 hours, and then temperature-increased to 600°C over 6 hours and held at that temperature for another 6 hours, and then temperature-decreased to room temperature over 6 hours). When the base material was placed in the electric muffle furnace, the glass-sealed portion of the base material was placed on the base, thereby avoiding contact with the membrane-formed portion.
(iv) The dip coating and baking (the procedures of the foregoing steps (ii) to (iii)) were performed for three times by repetition, thereby preparing a porous support having a Ga-added γ-alumina layer (intermediate layer) formed on the outer circumferential face of a tubular α-alumina base material (base material layer); this porous support is hereinafter sometimes referred to as "γ/α-alumina base material" or simply "base material".

### (2) Formation of Amorphous Silica Layer (Silica Membrane)

An amorphous silica layer (silica membrane) was formed, by the counter diffusion CVD method, on the outer circumferential face of the porous support (γ/α-alumina base material) having a double layer structure and prepared as described above.

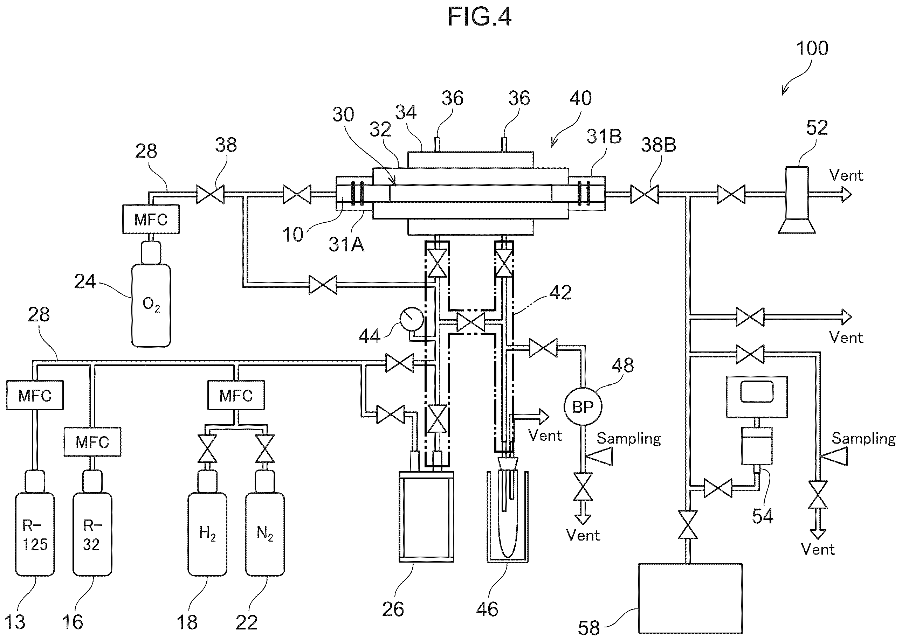

The schematic configuration of an apparatus 100 used for formation of the silica membrane is illustrated in Fig. 4. The apparatus 100 shown in Fig. 4 includes a gas tank 24 accommodating oxygen for use in membrane formation, as well as gas tanks 13, 16, 18, and 22 accommodating gases of R125, R32, H₂, and N₂, respectively. The apparatus 100 is configured such that permeation tests for respective gases can be carried out by regulating a valve 38 or the like provided at each pipe 28. MFC is an abbreviation of mass flow controller. SUS tubes are used as pipes 28.

In a gas separator 40, a glass tube housing 32 is disposed at the outer side of a gas separation member 30 with a space B therebetween for allowing a gas that has permeated the gas separation member 30 to flow through, as seen in the configuration illustrated in Fig. 3. An electric furnace 34 equipped with thermocouples 36 is disposed at the outer side of the housing 32.

The glass-sealed portion of the base material 10 located at each end portion protruding from the housing 32 was joined to a SUS fitting, using a graphite ferrule (manufactured by GL Sciences Inc.) and a union (manufactured by Swagelok) (31A or 31B). Pressure gauges 44 and 48, a soap film flow meter 52, a pressure transducer 54, and a vacuum pump 58 are connected to respective pipes 28.

An amorphous silica layer was formed on the porous support (γ/α-alumina base material) 10, using the apparatus 100 having the foregoing configuration. In the forming of the amorphous silica layer, the silica precursor (precursor) was placed in a bubbler 26, nitrogen was supplied to the bubbler 26 at a flow rate of 200 mL/min, and silica precursor vapor was supplied to the housing 32 as a result of the bubbling. A ribbon heater 42 was wound around pipes 28 and the pipe temperature was maintained at 180°C, so as to prevent condensation of the precursor in the pipes 28. Any unreacted precursor was collected by an ice-water cold trap 46. The temperature of the bubbler 26 was controlled by being wrapped by a mantle heater (now shown).

The concentration of the silica precursor vapor before membrane formation was determined by allowing the silica precursor in the nitrogen carrier gas to be trapped by the ice-water cold trap 46 for a predetermined period of time, using a gas line that did not go through the housing 32, and calculating the silica precursor vapor concentration (mol/m³).

### (Formation of Silica Membrane Using Conter Diffusion CVD Method)

Dimethoxy diphenyl silane (DMDPS, manufactured by Tokyo Chemical Industry Co., Ltd.) represented by the following structural formula was used as the precursor.

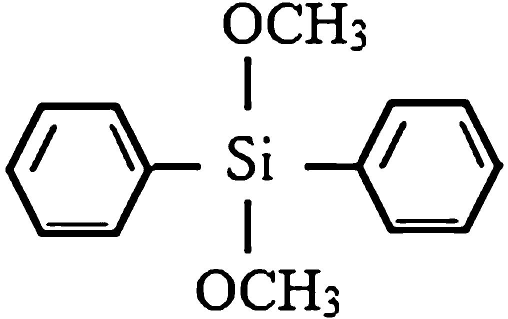

The physical properties of DMDPS are shown in Table 2.

**Table 2**

| Molecular Formula | Molecular Weight | Specific Gravity | Boiling Point |
|---|---|---|---|
| C₁₄H₁₆O₂Si | 244.37 | 1.08 | 110°C |

### <Membrane-forming Procedure>

The respective temperature controllers for the electric furnace 34 disposed at the outer side of the housing, the ribbon heater 42, and the bubbler 26 were powered on. The furnace 34 was temperature-increased from room temperature to 600°C over 1.5 hours, and the ribbon heater 42 was set to 180°C.

After all of the temperatures became stable, the ice-water cold trap 46 was prepared. The DMDPS vapor concentration determination was carried out using the gas line that did not go through the housing 32, and the bubbler temperature was adjusted such that the DMDPS vapor concentration became a value that is equal to or close to about 0.08 mol/m³. After the bubbler temperature was adjusted, DMDPS vapor was supplied to the housing 32 (base material outer side B). Two minutes later, oxygen was allowed to flow through the base material inner side A at 200 mL/min, thereby initiating membrane formation

60 minutes later, the supply of the DMDPS vapor was stopped, nitrogen was allowed to flow through the base material outer side B at a full flow rate, and oxygen gas was allowed to flow through the base material inner side A at 200 mL/min, thereby purging the inside of the housing 32. One hour later, the supply of oxygen was stopped, the base material inner side A was purged with nitrogen at a full flow rate for a few minutes, and the membrane formation was finished.

### <Gas Permeability Evaluation>

### (Single Component Gas Permeation Test 1)

After the silica membrane was formed, a gas permeation test was performed using the apparatus 100 illustrated in Fig. 4. A gas was supplied to the supply side (the outer side of the base material), a valve 38B disposed at the membrane exit was closed, and a pressure was applied to the supply side. At this time, the supply side pressure was set to from 0.20 to 0.40 MPa, the gas was allowed to permeate in a dead-end manner with a difference between the respective sides of the membrane of from 0.20 to 0.40 MPa, and the flow rate of the permeate gas obtained at the permeate side was measured using a soap film flow meter (bubble flow meter: BFM) 52 (manufactured by HORIBA STEC Co., Ltd.). Ordinarily, measurement was performed by the BMF 52 in a case in which the gas flow rate at the permeate side was large. In a case in which the gas flow rate at the permeate side was so small as to be unable to measure by the BMF, the gas flow rate at the permeate side was measured using a pressure-change method. In the pressure-change method, the supply side pressure was set to 0.20 MPa, and the permeate side was subjected to vacuum using an oil rotary vacuum pump 58 (manufactured by ULVAC, Inc.) for 2 hours, thereby providing a pressure difference of about 0.35 MPa between both sides of the membrane. Permeation occurred upon supply of the gas to the supply side, and the pressure at the permeate side started to increase. The pressure was measured over time, the pressure increase rate was determined, and the permeate gas flow rate was calculated based on the permeate side volume.

### (Temperature Dependence)

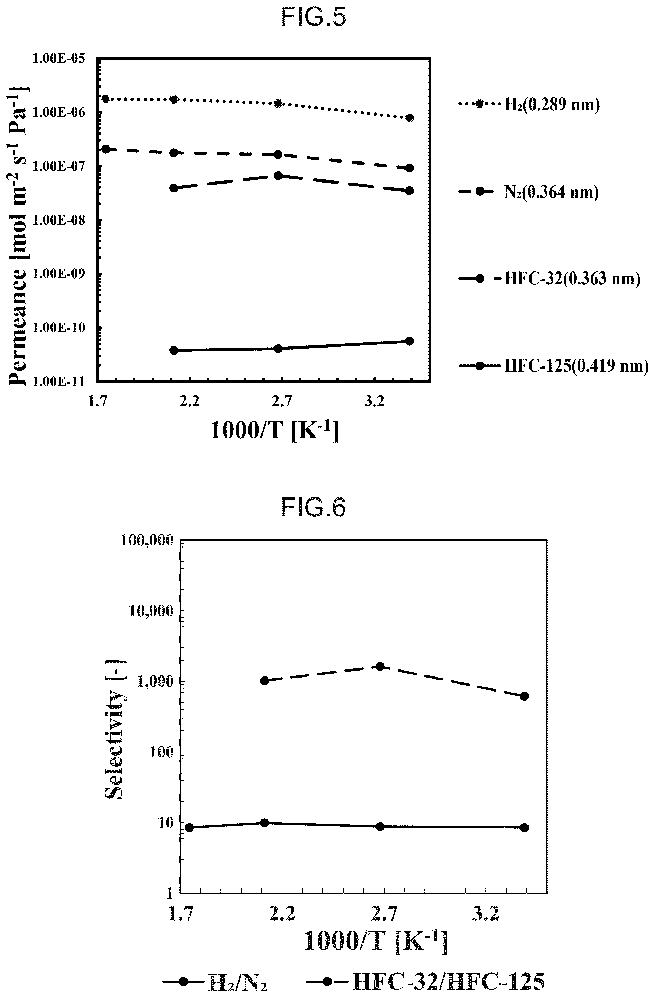

The temperature dependence of the permeabilities for H₂, N₂, HFC-32, and HFC-125 of the silica membrane having a membrane length of 80 mm formed on the Ga-added γ/α-alumina base material is shown in Fig. 5. In Fig. 5, the character "E" at the vertical axis means a power of 10, and, for example, "E-10" means "10⁻¹⁰". The temperature dependence of the ideal selectivity is shown in Fig. 6. According to the NKP method (at 200°C) described above, the average pore diameter of the silica membrane is considered to be approximately from 0.40 to 0.55 nm, and it is found that the average pore diameter is suitable for separation between HFC-32 and HFC-125. The permeabilities for HFC-32 and HFC-125 at 200°C, 100°C, and 25°C and the permeability ratio are indicated in Table 3 below.

**Table 3**

| | Permeability (mol/(m²•s•Pa)) | | Permeability Ratio (HFC-32/HFC-125) |
|---|---|---|---|
| Temperature | HFC-32 | HFC-125 | |
| 200°C | 3.89×10⁻⁸ | 3.79×10⁻¹¹ | 1026 |
| 100°C | 6.62×10⁻⁸ | 4.08×10⁻¹¹ | 1623 |
| 25°C | 3.46×10⁻⁸ | 5.61×10⁻¹¹ | 617 |

The ideal selectivity calculated as "the permeability for HFC-32 / the permeability for HFC-125" was 1026 at 200°C, 1623 at 100°C, and 617 at 25°C. For reference, the ideal selectivity calculated as "the permeability for H₂ / the permeability for N₂" was about 10 at all of the temperatures. These results also demonstrate suitability for the separation between HFC-32 and HFC-125.

### (Single-component Gas Permeation Test 2)

After the silica membrane was formed, a gas permeation test was performed using the apparatus 100 illustrated in Fig. 4. A gas was supplied to the supply side (the outer side of the base material), a valve 38B disposed at the membrane exit was closed, and a pressure was applied to the supply side. At this time, the supply side pressure was set to from 0.20 to 0.60 MPa, the gas was allowed to permeate in a dead-end manner with a difference between the respective sides of the membrane of from 0.10 to 0.50 MPa, and the flow rate of the permeate gas obtained at the permeate side was measured using a soap film flow meter (bubble flow meter: BFM) 52 (manufactured by HORIBA STEC Co., Ltd.). Ordinarily, measurement was performed by the BMF 52 in a case in which the gas flow rate at the permeate side was large. In a case in which the gas flow rate at the permeate side was so small as to be unable to measure by the BMF, the gas flow rate at the permeate side was measured using a pressure-change method. In the pressure-change method, the supply side pressure was set to from 0.20 to 0.60 MPa, and the permeate side was subjected to vacuum using an oil rotary vacuum pump 58 (manufactured by ULVAC, Inc.) for 2 hours, thereby providing a pressure difference of approximately from 0.20 to 0.60 MPa between both sides of the membrane. Permeation occurred upon supply of the gas to the supply side, and the pressure at the permeate side started to increase. The pressure was measured over time, the pressure increase rate was determined, and the permeate gas flow rate was calculated based on the permeate side volume.

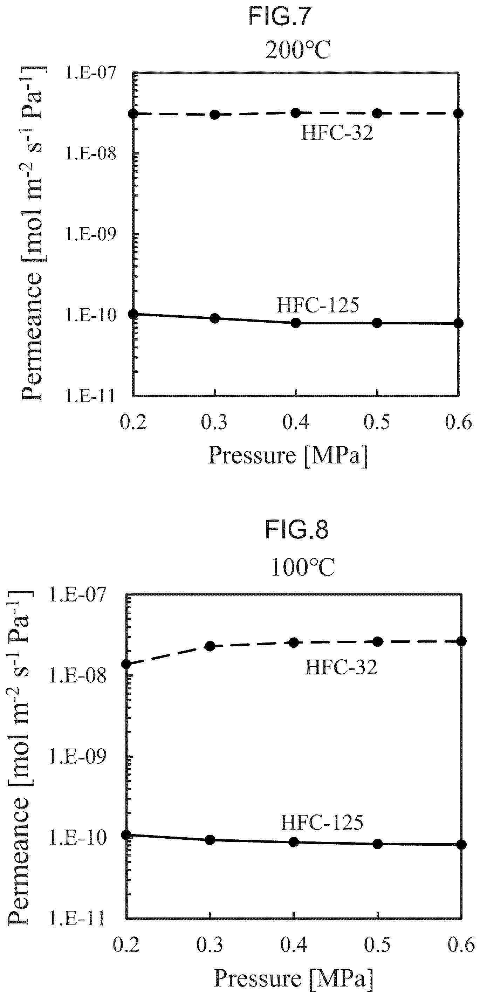

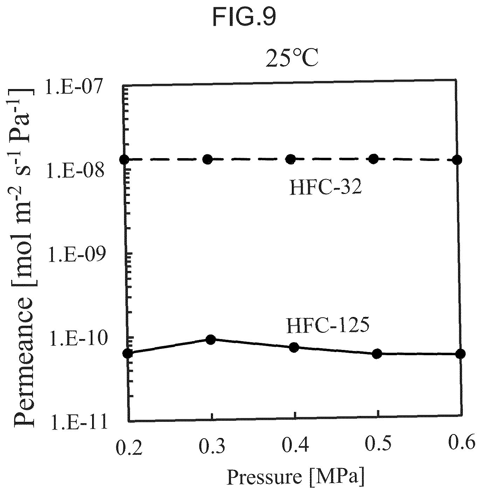

The relations between the supply side pressure and the permeability with respect to HFC-32 and HFC-125 are indicated in Figs. 7, 8, and 9, respectively for 200°C, 100°C, and 25°C. No significant difference due to difference in pressure was not found (i.e., pressure dependence was not found) with respect to the permeabilities for HFC-32 and HFC-125, at all of the temperatures employed in the tests.

### Industrial Applicability

According to the method of separating a mixed fluorocarbon gas according to the present disclosure, separation can be realized with small energy consumption as compared to separation by distillation, and large economic effects are expected. Further, the method can contribute to regulations on refrigerants that are pointed out as having a greenhouse effect that is at least 100 times greater than that of carbon dioxide.

The disclosure of Japanese Patent Application No. 2023-059349, filed March 31, 2023, and the disclosure of Japanese Patent Application No. 2023-112649, filed July 7, 2023, are incorporated herein by reference in their entirety. All documents, patent applications, and technical standards mentioned in the present specification are incorporated herein by reference to the same extent as if each individual document, patent application, or technical standard were specifically and individually indicated to be incorporated by reference.

### Explanation of Reference Characters

10: Porous Support
13, 16, 18, 22: Gas Tanks
12: Support Layer
14: Intermediate Layer
20: Amorphous Silica Layer (Molecular Sieve Membrane)
24: Gas Tank
26: Bubbler
28, 28A, 28B: Pipes
30: Gas Separation Member
32: Housing
33A, 33B: Sealing Member
34: Electric Furnace
36: Thermocouple
38, 38B: Valves
40: Gas Separator
42: Ribbon Heater
44: Pressure Gauge
46: Ice-water Cold Trap
50: Gas Separator
52: Soap Film Flow Meter
54: Pressure Transducer
58: Vacuum Pump
100: Membrane Producing Apparatus, which is also a gas permeation testing apparatus

## Claims

1. A method of separating a mixed fluorocarbon gas, the method comprising:
a molecular sieve membrane preparation step of preparing a molecular sieve membrane that includes an amorphous silica and that is formed using a chemical vapor deposition method; and
a gas separation step of bringing a mixed gas that includes two or more kinds of fluorocarbon gases having different molecular diameters into contact with the molecular sieve membrane, thereby performing separation so as to obtain a gas in which a mixing ratio between the two or more kinds of fluorocarbon gases is different from that in the mixed gas before being brought into contact with the molecular sieve membrane.

2. The method of separating a mixed fluorocarbon gas according to claim 1, wherein the molecular sieve membrane is an amorphous silica membrane having a structure including an -Si-O-Si- bond.

3. The method of separating a mixed fluorocarbon gas according to claim 1, wherein the gas separation step is conducted in an environment of from 20°C to 300°C.

4. The method of separating a mixed fluorocarbon gas according to claim 1, wherein the gas separation step is conducted in an environment of 0.1 MPa or more.

5. The method of separating a mixed fluorocarbon gas according to claim 1, wherein the molecular sieve membrane has been formed using dimethoxy diphenyl silane as a chemical vapor deposition material in the chemical vapor deposition method.

6. The method of separating a mixed fluorocarbon gas according to claim 1, wherein the chemical vapor deposition method is a counter diffusion method.

7. The method of separating a mixed fluorocarbon gas according to claim 1, wherein the molecular sieve membrane is formed on a porous support made of a ceramic.

8. The method of separating a mixed fluorocarbon gas according to any one of claims 1 to 7, wherein the mixed fluorocarbon gas is a mixed gas of difluoromethane and pentafluoroethane.

9. A separation device, comprising an amorphous silica-containing porous membrane formed using a chemical vapor deposition method,
wherein the device separates, via the porous membrane, a single gas or a gas composition having an increased mixing ratio of one kind of fluorocarbon gas from a mixed gas containing two or more kinds of fluorocarbon gases having different molecular diameters.
